# FASCICULE DE BREVET EUROPEEN

(11) **EP 0 469 996 B1**
(45) Date de publication et mention de la délivrance du brevet: **20.09.1995**
(21) Numéro de dépôt: 91402152.2
(22) Date de dépôt: 31.07.1991
(51) Int. Cl.: H04L 5/24, H04L 25/36

(54) **Procédé et dispositif d'adaptation d'un signal transmis entre deux réseaux numériques**
Verfahren und Einrichtung zur Adaptation eines Signals, welches zwischen zwei digitalen Netzwerken übermittelt wird
Method and apparatus for adapting a signal transmitted between two digital networks

(30) Priorité: 02.08.1990 FR 9009902
(43) Date de publication de la demande: 05.02.1992
(73) Titulaire: MATRA COMMUNICATION, 29101 Quimper (FR)
(72) Inventeur: Hodbert, Francis, F-91380 Chilly Mazarin (FR); Harl, Jean Benoît, F-75014 Paris (FR)
(74) Mandataire: Fruchard, Guy

(56) Documents cités:
- WO-A-86/00482
- DE-A- 3 004 393
- GB-A- 2 118 400
- US-A- 4 586 189

## Description

La présente invention concerne un procédé et un dispositif d'adaptation d'un signal numérique transmis entre deux réseaux numériques.

On sait qu'avec l'utilisation croissante de réseaux numériques, comme par exemple le réseau numérique à intégration de services, pour différentes applications telles que des transmissions de la parole, de signaux de télécopie, de télex, ou des données élaborées par un ordinateur, il est nécessaire de procéder à une adaptation d'un signal numérique à l'entrée ou à la sortie d'une utilisation particulière pour adapter ce signal au réseau de transmission.

En particulier, on sait que les ordinateurs transmettent généralement les données selon un mode asynchrone alors qu'il existe des réseaux de transmission numérique à usages multiples qui fonctionnent selon le mode synchrone.

Actuellement, les ordinateurs fonctionnent généralement à une vitesse variant de 75 bits/s à 19.200 bits/s. L'adaptation du mode asynchrone au mode synchrone sur un réseau de transmission fonctionnant par exemple à 64.000 bits/s est actuellement effectuée selon un procédé très complexe impliquant un bourrage de la trame à 64.000 bits/s. Ce procédé qui est décrit en particulier dans le document GB-A-2.118.400 est difficilement adaptable à différentes vitesses de fonctionnement d'un organe d'utilisation. Par ailleurs, on a remarqué qu'il était possible de porter la vitesse de sortie des données d'un ordinateur à une valeur considérablement supérieure aux vitesses actuelles, par exemple à 57.600 bits/s en mode asynchrone et les procédés d'adaptation actuels permettraient difficilement d'adapter une telle vitesse à un réseau de transmission synchrone fonctionnant à 64.000 bits/s.

L'invention concerne l'adaptation d'un signal numérique comportant des caractères transmis entre un équipement asynchrone fonctionnant à une première vitesse et un réseau synchrone fonctionnant à une seconde vitesse supérieure à la première vitesse, comportant les étapes de reproduire à la seconde vitesse chaque caractère d'un signal reçu à la première vitesse et introduire celui-ci dans une cellule du réseau synchrone en synchronisme avec ce réseau en laissant les bits restants de la cellule dans un état correspondant à un état de repos. Ainsi, un caractère émis par l'équipement asynchrone est transmis sur le réseau synchrone avec le même nombre de bits, seul le nombre de bits séparant deux caractères étant changé.

Selon une version avantageuse de l'invention, le procédé comporte l'étape de mémoriser un signal reçu dans un organe de mémoire et lire l'organe de mémoire à la seconde vitesse au moment de son introduction sur le réseau synchrone. Ainsi, la transmission sur le réseau synchrone en synchronisme avec la trame de celui-ci est aisément obtenue par la commande des instants de lecture de l'organe de mémoire.

Selon un autre aspect, l'invention concerne un dispositif d'adaptation d'un signal numérique comportant des caractères transmis entre un équipement asynchrone fonctionnant à une première vitesse et un réseau synchrone fonctionnant à une seconde vitesse supérieure à la première vitesse, caractérisé en ce qu'il comporte un organe de reproduction pour reproduire à la seconde vitesse chaque caractère d'un signal reçu à la première vitesse et introduire celui-ci dans une cellule du réseau synchrone en synchronisme avec ce réseau en laissant des bits restants de la cellule dans un état correspondant à un état de repos.

Selon une version préférée de cet aspect de l'invention, le dispositif comporte un organe de mémoire, un organe d'écriture pour inscrire un signal reçu à la première vitesse dans l'organe de mémoire, et un organe de lecture synchronisé avec le réseau synchrone pour lire à la seconde vitesse les signaux mémorisés dans l'organe de mémoire et introduire ceux-ci sur le réseau synchrone.

Par ailleurs, un réseau de transmission synchrone est utilisé de façon courante pour assurer une liaison entre deux équipements asynchrones. Le procédé et le dispositif selon l'invention présentent l'avantage de pouvoir être mis en oeuvre de façon réversible pour permettre non seulement l'adaptation d'un signal asynchrone avec le réseau synchrone mais également la restitution d'un signal asynchrone à partir du réseau synchrone. A cet effet, dans un mode de réalisation préféré de l'invention, le procédé comporte, en outre, les étapes de reproduire à une troisième vitesse le signal transmis par le réseau synchrone et introduire le signal à la troisième vitesse sur une ligne d'entrée d'un équipement asynchrone. Pour la mise en oeuvre de ce procédé, l'organe d'écriture à une première vitesse du dispositif d'adaptation selon l'invention est de préférence un organe de lecture/écriture et l'organe de lecture synchronisé avec le réseau synchrone est également un organe de lecture/écriture. Bien entendu l'un de ces organes fonctionne en écriture pendant que l'autre organe fonctionne en lecture, la fonction de chaque organe étant déterminée par l'état de l'équipement, selon que celui-ci est en émission ou en réception.

D'autres caractéristiques et avantages de l'invention apparaîtront à la lecture de la description qui suit d'un mode de réalisation particulier non limitatif de l'invention en liaison avec les dessins ci-joints parmi lesquels :
- la figure 1 est un diagramme schématique du dispositif selon l'invention, fonctionnant dans le mode d'émission,
- la figure 2 est un diagramme schématique du dispositif selon l'invention fonctionnant dans le mode de réception.

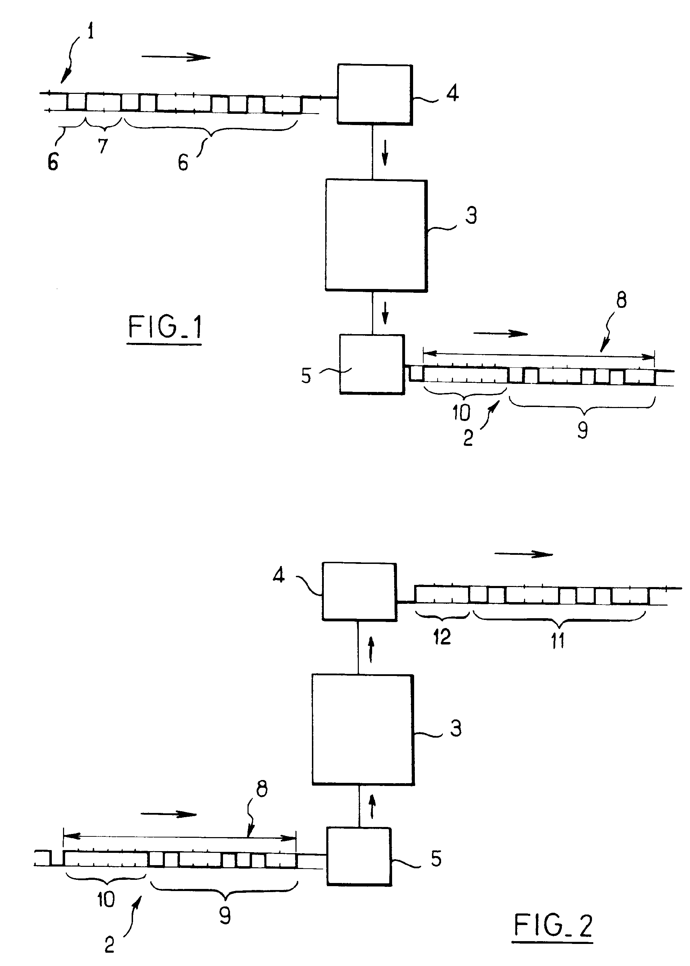

En référence à la figure 1, le dispositif selon l'invention, dans son mode émission, est destiné à adapter un signal numérique transmis entre un équipement asynchrone 1, par exemple la ligne de sortie d'un ordinateur, fonctionnant à une première vitesse, et un réseau synchrone 2, par exemple un réseau numérisé à intégration de services fonctionnant à une seconde vitesse supérieure à la première vitesse ; par exemple les données sont émises par l'ordinateur à une vitesse de 57.600 bits/s et le réseau numérique à intégration de services fonctionne à une vitesse de 64.000 bits/s.

Le dispositif selon l'invention comporte un organe de mémoire 3 ayant une entrée reliée à un organe de lecture/écriture 4 adapté à recevoir les signaux numériques à la première vitesse et à inscrire ceux-ci dans l'organe de mémoire 3. La sortie de l'organe de mémoire 3 est reliée à un organe de lecture/écriture 5 adapté à lire l'organe de mémoire 3 en synchronisme avec la trame du réseau synchrone 2.

Le procédé mis en oeuvre par le dispositif selon l'invention est le suivant : chaque caractère 6 arrivant de l'équipement asynchrone à une première vitesse est inscrit par l'organe de lecture/écriture 4 dans la mémoire 3. Dans l'exemple particulier illustré, un caractère comporte dix bits, le premier et le dernier bit étant respectivement des bits de départ et d'arrêt. Entre les caractères la ligne d'entrée reste à un niveau de repos qui, dans cet exemple, est un niveau haut. Les deux caractères illustrés arrivant au dispositif d'adaptation sont séparés par un intervalle 7 de deux bits. S'agissant d'un équipement asynchrone, cet intervalle est bien entendu susceptible de varier, seul le nombre de bits contenus dans un caractère étant constant.

Par ailleurs, l'organe de lecture/écriture 5 qui est synchronisé sur la trame du réseau synchrone 2 effectue une lecture caractère par caractère de l'organe de mémoire 3 et introduit chaque caractère dans une cellule 8 qui, dans l'exemple illustré, contient seize bits. La lecture est effectuée à une vitesse égale à celle du réseau synchrone 2 de sorte que les bits d'un caractère contenus dans l'organe de mémoire 3 se retrouvent dans une position fixe 9 au sein de la cellule 8, selon des états identiques aux états du caractère 6 qui a été préalablement mémorisé. Les autres bits de la cellule sont maintenus à un état correspondant à l'état de repos et, dans l'exemple illustré, les deux caractères qui étaient séparés par un intervalle 7 de deux bits en entrée, se trouvent à la sortie du dispositif d'adaptation séparés par un intervalle 10 de six bits. L'organe de lecture effectue donc une reproduction à la seconde vitesse du signal reçu à la première vitesse et introduit le signal à la seconde vitesse sur le réseau synchrone.

On remarquera que si aucun caractère n'est contenu dans l'organe de mémoire 3 et si deux caractères entrant dans le dispositif d'adaptation sont séparés par un nombre de bits correspondant à un temps supérieur au temps correspondant au nombre de bits restant normalement inoccupés dans chaque cellule 8 du réseau synchrone 2, une ou plusieurs cellules de ce réseau synchrone resteront vides.

A l'extrémité de sortie du réseau synchrone, l'organe de démodulation du dispositif (non représenté) recevant les signaux contenus dans chacune des cellules effectue une lecture systématique de toutes les cellules. On notera à ce propos qu'il importe peu que les caractères sur le réseau synchrone soient séparés par un nombre de bits différent de celui des caractères sur l'équipement asynchrone, puisque ce nombre de bits n'est de toute façon pas significatif pour un équipement asynchrone.

On remarquera également qu'à l'extrémité de sortie le réseau synchrone peut être relié soit à un équipement synchrone qui'reçoit alors toutes les cellules transmises par le réseau synchrone, soit un équipement asynchrone. Dans ce dernier cas, on utilise avantageusement à nouveau le dispositif d'adaptation selon l'invention,dans le mode de réception comme illustré par la figure 2. Dans l'exemple de la figure 2, les cellules 8 transmises par le réseau synchrone 2 sont reçues par l'organe de lecture/écriture 5 fonctionnant cette fois en mode d'écriture à la seconde vitesse.

De préférence l'organe de lecture/écriture 5 n'inscrit dans la mémoire 3 que les bits significatifs. La mémoire 3 est ensuite lue à une troisième vitesse par le dispositif de lecture/écriture 4 fonctionnant en mode de lecture. On remarquera à ce propos que la troisième vitesse peut être quelconque, c'est-à-dire être supérieure, inférieure ou égale à la seconde vitesse puisque la sortie vers un équipement asynchrone n'est pas soumise à une contrainte de synchronisme avec le réseau synchrone 2.

Dans l'exemple illustré, la troisième vitesse est égale à la première vitesse et l'on obtient donc des caractères 11 ayant le même nombre de bits que les caractères 6 et la même durée. L'organe de lecture/écriture 4 fonctionnant en lecture n'est pas synchronisé avec le réseau synchrone et le nombre de bits de l'intervalle 12 séparant deux caractères en sortie n'est pas nécessairement le même que le nombre de bits de l'intervalle 7 séparant deux caractères en entrée. Dans l'exemple illustré, l'intervalle 7 contient deux bits alors que l'intervalle 12 contient trois bits. Une fois encore, il est rappelé que le nombre de bits de ces intervalles peut varier puisqu'il n'est pas significatif pour le fonctionnement d'un équipement asynchrone.

Bien entendu, l'invention n'est pas limitée au mode de réalisation décrit et on peut y apporter des variantes de réalisation sans sortir du cadre de l'invention. En particulier, bien que dans le mode de réalisation décrit ont ait prévu un organe de mémoire permettant de stocker provisoirement les signaux reçus à la première vitesse, ce qui permet d'utiliser le dispositif selon l'invention en liaison avec un réseau synchrone fonctionnant en multi-plexage, le dispositif selon l'invention peut également être réalisé avec un organe de lecture 5 effectuant directement la reproduction du signal provenant de l'équipement asynchrone.

On peut également prévoir des variantes de réalisation destinés à compenser des erreurs d'horloge.

## Revendications

1. Procédé d'adaptation d'un signal numérique comportant des caractères (6) transmis entre un équipement asynchrone (1) fonctionnant à une première vitesse et un réseau synchrone (2) fonctionnant à une seconde vitesse supérieure à la première vitesse caractérisé en ce qu'il comporte des étapes de reproduire à la seconde vitesse chaque caractère d'un signal reçu à la première vitesse et introduire celui-ci dans une cellule (8) du réseau synchrone en synchronisme avec ce réseau en laissant les bits restants (10) de la cellule (8) dans un état correspondant à un état de repos.

2. Procédé d'adaptation selon la revendication 1, caractérisé en ce qu'il comporte l'étape de mémoriser un signal reçu à la première vitesse et lire le signal mémorisé à la seconde vitesse au moment de son introduction sur le réseau synchrone.

3. Procédé d'adaptation d'un signal numérique transmis par un réseau synchrone selon la revendication 1 ou la revendication 2, caractérisé en ce qu'il comporte les étapes de reproduire à une troisième vitesse le signal transmis par le réseau synchrone, et introduire le signal à la troisième vitesse sur une ligne d'entrée d'un équipement asynchrone.

4. Procédé d'adaptation selon la revendication 3, caractérisé en ce qu'il comporte l'étape de mémoriser un signal reçu à la seconde vitesse et lire le signal mémorisé à la troisième vitesse.

5. Dispositif d'adaptation d'un signal numérique comportant des caractères (6) transmis entre un équipement asynchrone fonctionnant à une première vitesse et un réseau synchrone fonctionnant à une seconde vitesse supérieure à la première vitesse, caractérisé en ce qu'il comporte un organe de reproduction (5) pour reproduire à la seconde vitesse chaque caractère d'un signal reçu à la première vitesse et introduire celui-ci dans une cellule (8) du réseau synchrone en synchronisme avec ce réseau en laissant des bits restants (10) de la cellule (8) dans un état correspondant à un état de repos.

6. Dispositif d'adaptation selon la revendication 5, caractérisé en ce qu'il comporte un organe de mémoire (3), un organe d'écriture (4) pour inscrire un signal reçu à la première vitesse dans l'organe de mémoire, et un organe de lecture (5) synchronisé avec le réseau synchrone pour lire à la seconde vitesse les signaux mémorisés dans l'organe de mémoire et introduire ceux-ci sur le réseau synchrone.

7. Dispositif d'adaptation selon la revendication 6 caractérisé en ce que l'organe d'écriture (4) et l'organe de lecture (5) sont des organes de lecture/écriture fonctionnant dans des modes inverses l'un de l'autre.

## Patentansprüche

1. Verfahren zur Adaptation eines digitalen Signales, das Zeichen (6) umfaßt, die zwischen einer bei einer ersten Geschwindigkeit arbeitenden asynchronen Einrichtung (1) und einem bei einer gegenüber der ersten Geschwindigkeit höheren zweiten Geschwindigkeit arbeitenden synchronen Netz übertragen werden, **gekennzeichnet** durch die Schritte des Reproduzierens jedes Zeichens eines mit der ersten Geschwindigkeit empfangenen Signals mit der zweiten Geschwindigkeit und des Einführens desselben in eine Zelle (8) des synchronen Netzes synchron mit diesem Netz, wobei die verbleibenden Bits (10) der Zelle (8) in einem einem Ruhezustand entsprechenden Zustand belassen werden.

2. Verfahren nach Anspruch 1, **gekennzeichnet** durch den Schritt des Einspeicherns eines mit der ersten Geschwindigkeit empfangenen Signals und des Lesens des gespeicherten Signals mit der zweiten Geschwindigkeit im Augenblick seines Einführens in das synchrone Netz.

3. Verfahren zur Adaptation eines digitalen Signals, das durch ein synchrones Netz gemäß Anspruch 1 oder Anspruch 2 übertragen wird, **gekennzeichnet** durch die Schritte des Reproduzierens des durch das synchrone Netz übertragenen Signals mit einer dritten Geschwindigkeit und des Einführens des Signals mit der dritten Geschwindigkeit in eine Eingangsleitung einer asynchronen Einrichtung.

4. Verfahren nach Anspruch 3, **gekennzeichnet** durch den Schritt des Einspeicherns eines mit der zweiten Geschwindigkeit empfangenen Signals und des Lesens des gespeicherten Signals mit der dritten Geschwindigkeit.

5. Vorrichtung zur Adaptation eines digitalen Signales, das Zeichen (6) umfaßt, die zwischen einer bei einer ersten Geschwindigkeit arbeitenden asynchronen Einrichtung und einem bei einer gegenüber der ersten Geschwindigkeit höheren zweiten Geschwindigkeit arbeitenden synchronen Netz übertragen werden, dadurch **gekennzeichnet,** daß sie ein Reproduktionsorgan (5) hat, um jedes Zeichen eines mit der ersten Geschwindigkeit empfangenen Signales mit der zweiten Geschwindigkeit zu reproduzieren und dieses in eine Zelle (8) des synchronen Netzes synchron mit diesem Netz einzuführen, wobei man die Verbleibenden Bits (10) der Zelle (8) in einem einem Ruhezustand entsprechenden Zustand beläßt.

6. Vorrichtung nach Anspruch 5, dadurch **gekennzeichnet,** daß sie ein Speicherorgan (3), ein Schreiborgan (4) zum Einschreiben eines mit der ersten Geschwindigkeit empfangenen Signals in das Speicherorgan, und ein Leseorgan (5) hat, das mit dem synchronen Netz synchronisiert ist, um die in dem Speicherorgan gespeicherten Signale mit der zweiten Geschwindigkeit zu lesen und diesselben in das synchrone Netz einzuführen.

7. Vorrichtung nach Anspruch 6, dadurch **gekennzeichnet,** daß das Schreiborgan (4) und das Leseorgan (5) Schreib-/Leseorgane sind, die in zueinander inversen Moden arbeiten.

## Claims

1. A method of matching a digital signal comprising characters (6) transmitted between an asynchronous equipment (1) operating at a first speed and a synchronous network (2) operating at a second speed greater than the first speed, characterised in that the method includes the steps of reproducing at the second speed a signal received at the first speed and applying it into a cell (8) of the synchronous network in synchronism with the network while leaving remaining bits (10) of the cell (8) at a level corresponding to a rest level.

2. A matching method according to claim 1, characterized in that it includes the step of storing a signal received at the first speed and of reading back the stored signal at the second speed at the moment it is applied to the synchronous network.

3. A matching method for a digital signal transmitted by a synchronous network as per claim 1 or claim 2, characterized in that the method includes the steps of reproducing at a third speed signals that have been transmitted over the synchronous network, and of applying the signal at the third speed to an input line of an asynchronous equipment.

4. A matching method according to claim 3, characterized in that it includes the step of storing the signal received at the second speed and reading back the stored signal at the third speed.

5. Apparatus for matching a digital signal comprising characters (6) transmitted between an asynchronous equipment operating at a first speed and a synchronous network operating at a second speed higher than the first speed, characterized in that it includes a reproduction unit (5) for reproducing at the second speed each character of a signal received at the first speed and for applying it into a cell (8) of the synchronous network in synchronism with this network while leaving remaining bits (10) of the cell (8) at a level corresponding to a rest level.

6. Matching apparatus according to claim 5, characterized in that it includes a memory unit (3), a write unit (4) for writing a signal received at a first speed into the memory unit, and a read unit (5) synchronized with the synchronous network for reading at the second speed the signals stored in the memory unit, and for applying them to the synchronous network.

7. Matching apparatus according to claim 6, characterized in that the write unit (4) and the read unit (5) are read/write units operating in opposite modes to each other.
